# EUROPEAN PATENT APPLICATION

(11) **EP 3 521 666 A1**
(43) Date of publication of application: **07.08.2019**
(21) Application number: 17855869.8
(22) Date of filing: 20.09.2017
(51) Int. Cl.: F16H 63/38

(54) **SHIFT DEVICE FOR TRANSMISSION**

(30) Priority: 29.09.2016 JP 2016190711
(71) Applicant: Aisin AI Co., Ltd., Nishio-shi, Aichi 445-0006 (JP)
(72) Inventor: AKATSUKA, Hiroki, Nishio-shi Aichi 445-0006 (JP); NINOMIYA, Ryosuke, Nishio-shi Aichi 445-0006 (JP); ICHIKAWA, Masaya, Nishio-shi Aichi 445-0006 (JP); OSAWA, Hideya, Nishio-shi Aichi 445-0006 (JP)
(74) Representative: TBK
(86) International application number: PCT/JP2017/033845
(87) International publication number: WO 2018/061914

(57) **Abstract**

This shift device is provided with a detent device, which is provided with an engaging member that is provided between a housing and a shift fork and that engages in a recessed part of the shift fork, and an elastic member that pushes the engaging member toward the recessed part of the shift fork, the engaging member being pushed into the recessed part of the shift fork by the urging force of the elastic member and the shift fork being held in a neutral position when a hub and a transmission gear are in an unengaged neutral position, and the engaging member being pushed into an inclined surface of the shift fork by the urging force of the elastic member and the shift fork being urged into an engaged position when the hub is in an engaged position of being engaged with the transmission gear.

## Description

### TECHNICAL FIELD

This invention relates to a shift device for a transmission.

### BACKGROUND OF THE TECHNOLOGY

In Patent Literature 1, a shift fork which is rotatably supported by a rotation center shaft on the housing of a transmission is disclosed. The Patent Literature 1 discloses a shift device in which the shift fork is moved to an engaging position from the neutral position by swinging about the rotation center shaft thereof to shift the hub in a longitudinal direction of the power transmission shaft of the transmission.

### DOCUMENT LIST OF PRIOR ARTS

### PATENT LITERATURE

Patent Literature 1: JP2016 -65589 A

### DISCLOSURE OF INVENTION

### PROBLEMS TO BE SOLVED

However, according to the shift device for a transmission disclosed in the Patent Literature 1 explained above, since the shift fork is swingable about the rotation center shaft, it is desirable for a shift fork not to be deviated from the neutral position and the engaging position by for example, vibration caused when the vehicle is under running state.

The present invention was made in consideration of the above issues and problems of the related arts and it is an object of the invention to provide a shift device for a transmission is capable of stably maintaining the neutral position and the engaging position of the shift fork which swings about the rotation center shaft.

### MEANS FOR SOLVING THE PROBLEM

The shift device for a transmission associated with the present invention includes a power transmitting shaft, a housing accommodating the transmission which includes the power transmitting shaft, a shift shaft being displaceable in a longitudinal direction of the power transmitting shaft in response to a shift operation, a hub rotating with the power transmitting shaft as a unit and at the same time being shifted in a longitudinal direction of the power transmitting shaft to be engageable with a speed change gear provided on the power transmitting shaft in a rotational direction, a rotation center shaft provided at the housing on an axis line which extends in a direction orthogonal to an axis line of the power transmitting shaft and a shift fork including a connecting portion at a tip end portion, a recessed portion and an inclined surface continuing to an opening portion of the recessed portion and inclining relative to the rotation center shaft, wherein the shift fork is rotatably supported by the rotation center shaft and at the same time is engageable with the shift shaft and wherein the sift fork is swingable about the rotation center shaft in response to a displacement of the shift shaft to thereby shift the hub in the longitudinal direction of the power transmitting shaft via the connecting portion. The shift device for the transmission further comprises a detent device including an engaging member provided between the housing and the shift fork for engaging with the recessed portion of the shift fork and an elastic member which pushes the engaging member towards the recessed portion of the shift fork, wherein in a neutral position where the hub and the speed change gear are in a non-engaging state, the engaging member is pushed to the recessed portion by a biasing force of the elastic member to thereby maintain the neutral position of the shift fork and in an engaging position where the hub and the speed change gear are in an engaging state, the engaging member is pushed to the inclined surface of the shift fork by the biasing force of the elastic member thereby to bias the shift fork to the engaging position.

### ADVANTAGEOUS EFFECT OF INVENTION

As explained above, the neutral position and the engaging position of the shift fork which swings about the rotation center shaft are stably maintained by means of the detent device. Accordingly, the neutral position and the engaging position of the shift fork cannot be deviated from each other due to a vibration generated when the vehicle is running.

### BRIEF EXPLANATION OF ATTACHED DRAWINGS

Fig. 1 is a schematic view illustrating conceptually the shift device for a transmission according to one embodiment of the invention;
Fig. 2 is a schematic view indicating a shift operation of the shift device for a transmission shown in Fig. 1;
Fig. 3 is an explanatory view for explaining a concrete structure which swings the shift fork of the shift device for a transmission according to one embodiment of the invention;
Fig. 4 is an enlarged view of "A" portion shown in Fig.3;
Fig. 5 is a partial plan view indicating one embodiment of the detent device in the shift device for a transmission according to one embodiment of the invention;
Fig. 6A is a partial plan view indicating an operation of the detent device shown in Fig. 5;
Fig. 6B is a partial plan view indicating an operation of the detent device under a state that the shift fork is swung in a direction opposite to the direction shown in Fig. 6A;
Fig. 7 is a partial plan view indicating another embodiment of the detent device of the shift device for a transmission according to one embodiment of the invention;
Fig. 8A is a partial plan view indicating an operation of the detent device shown in Fig. 7; and
Fig. 8B is a partial plan view indicating an operation of the detent device under a state that the shift fork is swung in a direction opposite to the direction shown in Fig. 8A.

### THE EMBODIMENTS FOR IMPLEMENTING THE INVENTION

One embodiment of the invention will be explained with reference to the attached drawings.

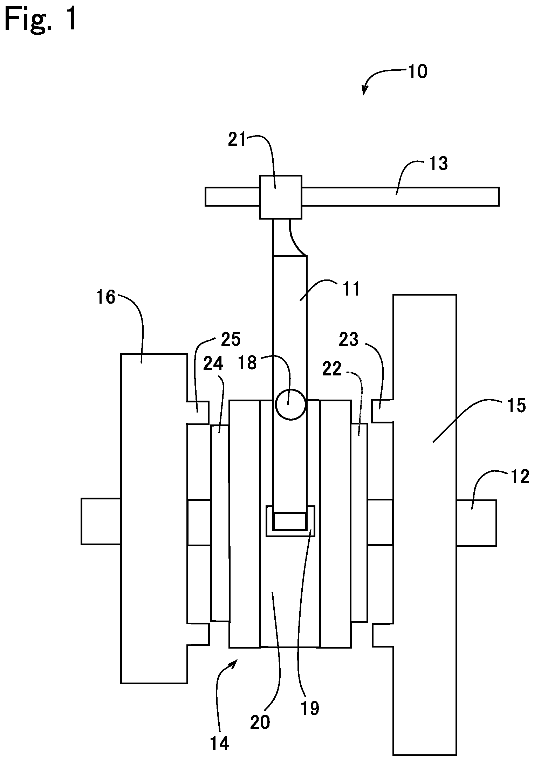

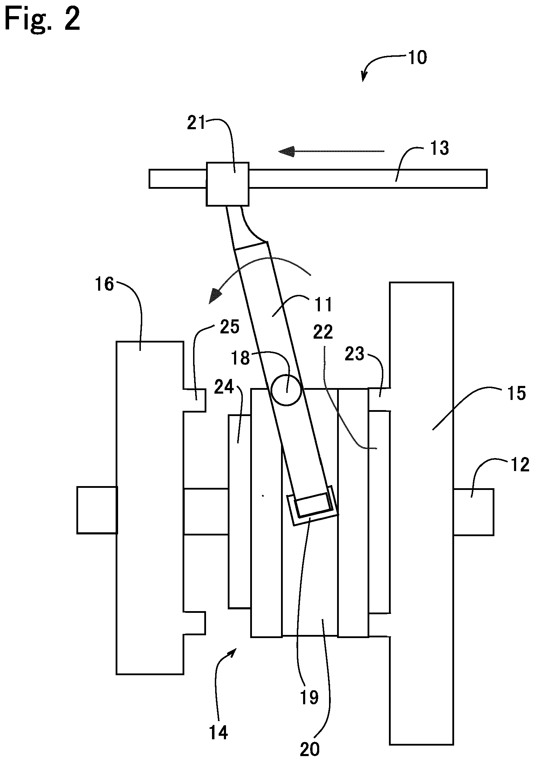

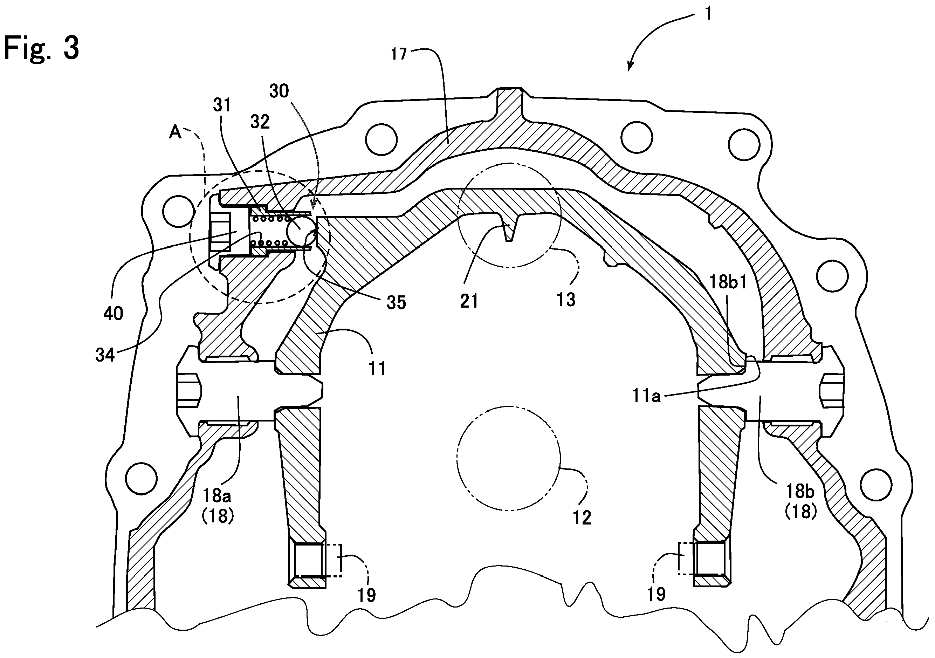

The outline of the structure and the operation of a shift device 10 for a transmission will be explained hereinafter with reference to Figs. 1 and 2. The shift device 10 for a transmission is operated such that a shift fork 11 is operated by a shift operation which selects an intended speed change gear by operating a shift lever (not shown). In response to the shift operation, a shift shaft 13 is displaced along in the longitudinal direction of a power transmitting shaft 12 of the transmission 1 (shown in Fig. 3). The shift device 10 for a transmission is provided at the transmission 1.

A hub 14 is rotated together with the power transmitting shaft 12 and at the same time shifted along in the longitudinal direction of the power transmitting shaft 12. The hub 14 is freely engageable in a rotating direction with an intended speed change gear of the speed change gears 15 and 16 which are loosely mounted on the power transmitting shaft 12. The hub 14 having shifted along in the longitudinal direction of the power transmitting shaft 12 engages with the intended speed change gear and rotates therewith in synchronization with the rotation of the speed change gear.

The speed change gears 15 and 16 are loosely mounted on the power transmitting shaft 12 and since the hub 14 is provided to be unitary rotated with the power transmitting shaft 12, the rotation of the speed change gears 15 and 16 is transmitted to the power transmitting shaft 12 via the hub 14.

The shift fork 11 which is engageable with the shift shaft 13 shifts the hub 14 in the longitudinal direction of the power transmitting shaft 12 by the shifting movement of the shift shaft 13 in the longitudinal direction of the power transmitting shaft 12. Since the hub 14 can be shifted in the longitudinal direction of the power transmitting shaft 12 with less force, the shift fork 11 is rotatably supported by a rotation center shaft 18 arranged on a housing 17 (shown in Fig. 3) on the axis line extending in a direction orthogonal to the axis line of the power transmitting shaft 12. The housing 17 accommodates the transmission 1 including the power transmitting shaft 12.

Thus, the shift fork 11 swings or rotates about the rotation center shaft 18 by the shifting of the power transmitting shaft 12 in the longitudinal direction indicated by the arrow shown in Fig. 2. The hub 14 is shifted in the longitudinal direction of the power transmitting shaft 12 via the sliding movement between a connecting portion 19 provided at the tip end portion of the shift fork 11 and a groove 20 provided at the outer peripheral portion of the hub 14.

One example of the shift operation of the transmission 1 is shown in Figs. 1 and 2. As shown in Fig. 1, the shift fork 11 is positioned at a neutral position where the hub 14 and the speed change gears 15 and 16 are in a non-engagement state and as shown in Fig. 2, by the swinging operation of the shift fork 11, the state is changed to the engagement state where the hub 14 and the intended speed change gear, for example the speed change gear 15 are engaged.

By using the principle of leverage, the shift fork 11 which swings about the rotation center shaft 18 swings under an engaging portion 21 engaging with the shift shaft 13 being the point of force, a connecting portion 19 being the point of application and the rotation center shaft 18 being the fulcrum to thereby shift the hub 14. Accordingly, the hub 14 can be shifted in the longitudinal direction of the power transmitting shaft 12 with using less force utilizing the principle of leverage.

The hub 14 which has been shifted has a gear wheel 22 at one side thereof which engages with the gear wheel 23 provided at the speed change gear 15. By this engagement, the power transmitted from the hub 14 to the speed change gear 15 is transmitted to the power transmitting shaft 12 via the hub 14.

Further, by the swinging of the shift fork 11 in a direction opposite to the swinging direction shown in Fig. 2, the hub 14 is engageable with the speed change gear 16 which is the intended speed stage change gear i.e., freely engageable in the rotating direction. The engagement between the hub 14 and the speed change gear 16 is performed by the engagement between a gear wheel 24 provided at the other side of the hub 14 and a gear wheel 25 of the speed change gear 16.

Next, a detent device according to one embodiment of the invention will be explained with reference to Figs. 3 through 5 and Figs. 6A and 6B. Fig. 3 shows the detail structure of the embodiment wherein the shift fork 11 swings about the rotation center shaft 18. The detent device 30 which stably maintains the neutral position and the engaging position of the shift fork 11 is provided between the housing 17 and the shift fork 11 as shown in Fig. 3.

The shift fork 11 is bent to form a C-shape as shown in Fig. 3 and both ends of the C-shape shift fork 11 are accommodated in the housing 17 and rotatably supported thereon to rotate about the respective rotation center shafts 18. The rotation center shaft 18 is accommodated in the housing 17 on the axis line extending in a direction perpendicular to the axis line of the power transmitting shaft 12.

In the example shown in Fig. 3, the rotation center shaft 18 includes a pair of rotation center shafts 18a and 18b provided on the same one axis line. It is noted that the number of the rotation center shafts 18 is not limited to the two and one rotation center shaft 18 can be apparently possible by combining the rotation center shafts 18a and 18b as a unit to form one single shaft.

The detent device 30 as shown in Figs. 3 through 5, a longitudinal cylindrical member 31 extending in the axis line direction of the rotation center shaft 18 and a detent ball 32 (corresponding to the engaging member) which is held in the cylindrical member 31 movably in the longitudinal direction of the cylindrical member 31. One side of the cylindrical member 31 is inserted into an insertion hole 33 provided at the housing 17 and the other side faces the shift fork 11 at the inside of the housing 17.

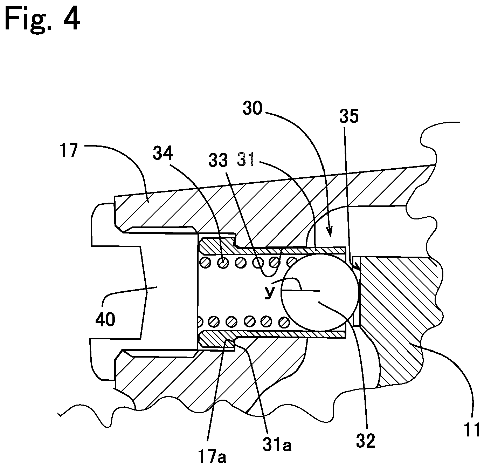

The detent ball 32 is pushed towards the shift fork 11 by a biasing force of an elastic member 34, such as a spring, etc., which acts in the axis line direction of the rotation center shaft 18, as shown in Figs. 3 and 4. In other words, the detent device 30 is arranged such that the biasing force of the elastic member 34 acts in the axis line direction of the rotation center shaft 18. The detent ball 32 has a curvature radius of "y" and the diameter thereof is indicated as "2y".

The shift fork 11 faces the detent ball 32 and includes a pressure receiving portion 35 which receives the pressing force from the detent ball 32. The pressure receiving portion 35 positions between the point of force and the fulcrum of the swing shift fork 11 according to the structure shown in Fig. 3.

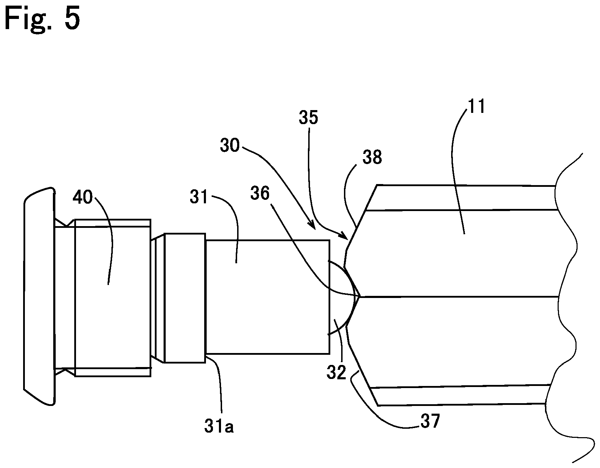

The pressure receiving portion 35 is formed by a recessed portion 36 and an inclined surface continuing to the opening portion of the recessed portion 36 and inclining relative to the rotation center shaft 18, i.e., the first inclined surface 37 and the second inclined surface 38. The first inclined surface 37 and the second inclined surface 38 are provided respectively along in both swinging directions (upper and lower directions as viewed in Fig. 5) of the shift fork 11 with respect to the recessed portion 36.

Under the neutral position of the non-engagement state of the hub 14 and the speed change gears 15 and 16, the shift fork 11 positions shown in Fig. 5 and the detent ball 32 engages with the recessed portion 36 and is pushed by the biasing force of the elastic member 34, thereby to stably maintain the shift fork 11 at the neutral position.

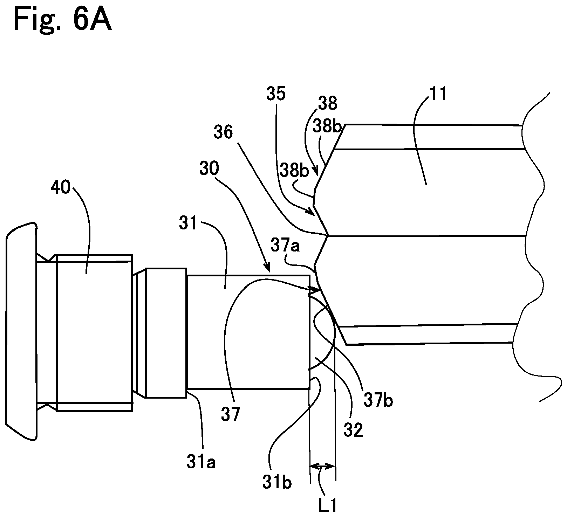

When the shift fork 11 swings to change the position from the neutral position shown in Fig. 5 to the engaging position, for example, the first engaging position where the hub 14 engages with the speed change gear 15, accompanied by the swinging operation of the shift fork 11, the detent ball 32 disengaged from the recessed portion 36 overcoming the biasing force of the elastic member 34 and is moved to the inclined surface, for example, to the first inclined surface 37, as shown in Fig. 6A. The detent ball 32 that has been shifted to the first inclined surface 37 is pushed to the first inclined surface 37 by the biasing force of the elastic member 34, thereby to stably maintain the shift fork 11 at the first engaging position.

The first inclined surface 37 is configured such that the closer the first inclined surface 37 approaches the opening portion of the recessed portion 36, the narrower the facing distance L1 between a tip end surface 31 b of the cylindrical member 31 and the first inclined surface 37 becomes, as shown in Fig. 6A. The first inclined surface 37 includes a first surface 37a continuing to the opening portion of the recessed portion 36 and a second surface 37b continuing to the first surface 37a. The surface of the second surface 37b has a steep inclination that has a large change ratio of the facing distance L1 compared to that of the first surface 37a. As shown in Fig. 6A, in the shift fork 11, at the first engaging position where the hub 14 and the speed change gear 15 engage, the detent ball 32 is biased to the second surface 37b of the first inclined surface 37 by the biasing force of the elastic member 34. Accordingly, since the slope of the second surface 37b of the detent ball 32 is steeper than that of the first surface 37a, the shift fork 11 is maintained stably at the first engaging position. As stated above, by providing a gradually sloped surface and a steeply sloped surface at the first surface 37a and the second surface 37b of the first inclined surface 37, respectively, different tangent angles can be set at the detent ball 32 and the first inclined surface 37. Thus, any desired pushing load of the detent ball 32 to the first inclined surface 37 can be easily set.

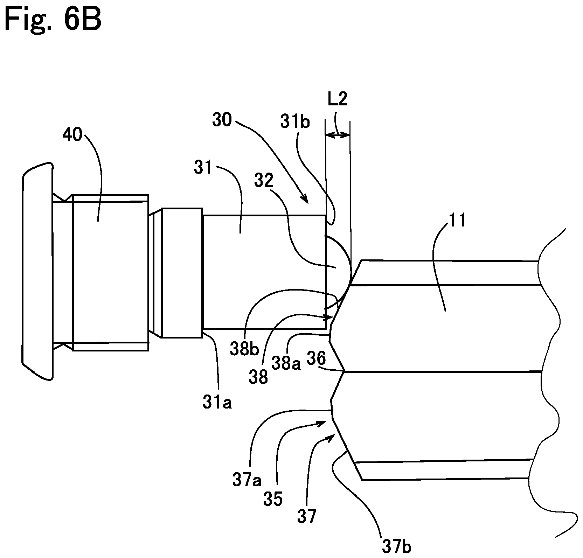

Further, when the detent ball 32 moves from the neutral position as shown in Fig. 5 to the second engaging position where the hub 14 and the speed change gear 16 engage by the swinging operation of the shift fork 11, accompanied by the swinging of the shift fork 11, the detent ball 32 is disengaged from the recessed portion 36, overcoming the pressing force (biasing force) of the elastic member 34 and is moved to the second inclined surface 38 as shown in Fig. 6B. Thus the detent ball 32 which has moved to the second inclined surface 38 is pressed on the second inclined surface 38 by the biasing force of the elastic member 34. Thus, the shift fork 11 is stably maintained at the second engaging position.

Similar to the first inclined surface 37, the second inclined surface 38 is configured such that the closer the second inclined surface 38 approaches the opening portion of the recessed portion 36, the narrower the facing distance L2 between the tip end surface 31b of the cylindrical member 31 and the second inclined surface 38 becomes, as shown in Fig. 6B. The second inclined surface 38 includes a first surface 38a continuing to the opening portion of the recessed portion 36 and a second surface 38b continuing to the first surface 38a. The surface of the second surface 38b has a steep inclination that has a large change ratio of the facing distance L2 compared to that of the first surface 38a. As shown in Fig. 6B, in the shift fork 11, at the second engaging position where the hub 14 and the speed change gear 16 engage, the detent ball 32 is biased to the second surface 38b of the second inclined surface 38 by the biasing force of the elastic member 34. Accordingly, since the slope of the second surface 38b of the detent ball 32 is steeper than that of the first surface 38a, the shift fork 11 is maintained stably at the second engaging position. As stated above, by providing a gradually sloped surface and a steeply sloped surface at the first surface 38a and the second surface 38b of the second inclined surface 38, respectively, different tangent angles can be set at the detent ball 32 and the second inclined surface 38. Thus, a desired pushing load of the detent ball 32 to the second inclined surface 38 can be easily set.

As stated above, as shown in Fig. 6A, when the shift fork 11 is positioned at the first engaging position and the detent ball 32 is pushed to the second surface 37b of the first inclined surface 37, the facing distance L1 between the tip end surface 31b of the cylindrical member 31 and the first inclined surface 37 is set to be a distance that would not separate the detent ball 32 from the cylindrical member 31. In more detail, the facing distance L1 between the position of the shift fork 11 where the detent ball 32 is pushed to the second surface 37b of the first inclined surface 37 and the tip end surface 31b of the cylindrical member 31 relative to the longitudinal direction of the cylindrical member 31 is set to the length shorter than the diameter "2y" of the detent ball 32.

Similarly, as shown in Fig. 6B, when the shift fork 11 is positioned at the second engaging position and the detent ball 32 is pushed to the second surface 38b of the second inclined surface 38, the facing distance L2 between the tip end surface 31b of the cylindrical member 31 and the second inclined surface 38 is set to be a distance that would not separate the detent ball 32 from the cylindrical member 31. In more detail, the facing distance L2 between the position of the shift fork 11 where the detent ball 32 is pushed to the second surface 38b of the second inclined surface 38 and the tip end surface 31b of the cylindrical member 31 relative to the longitudinal direction of the cylindrical member 31 is set to the length shorter than the diameter "2y" of the detent ball 32.

As explained above, the relation between the diameter "2y" of the detent ball 32 and the set facing distances L1 and L2 can be expressed as L1, L2 < 2y. According to the relationship, under the state that the shift fork 11 is at the first engaging position or the second engaging position, when the detent ball 32 pushes the first inclined surface 37 or the second inclined surface 38, the detent ball 32 is prevented from dropping off from the cylindrical member 31.

The detent device 30 is provided with a shoulder portion 31a at the outer peripheral portion of the cylindrical member 31, as shown in Fig. 4. A detent portion 17a which can engage with the shoulder portion 31a is provided on the housing 17. The detent portion 17a is provided at an entrance side of the inserting hole 33 of the cylindrical member 31 in the housing 17. Thus, the positioning of the cylindrical member 31 relative to the housing 17 can be performed. Accordingly, the facing distance L1, L2 between the position of the inclined surface 37, 38 of the shift fork 11 where the detent ball 32 is pushed and the tip end surface 31b of the cylindrical member 31 in a longitudinal direction of the cylindrical member 31, which is the distance necessary for preventing the detent ball 32 from dropping off from the cylindrical member 31, can be easily set. As a result, the prevention of detent ball 32 from dropping off from the cylindrical member 31 becomes easy. The engaging and the holding of the shoulder portion 31a of the cylindrical member 31 to the detent portion 17a of the housing 17 can be made by a plug 40 screwed to the housing 17.

A contact portion 11a provided on the shift fork 11 is brought into contact with a stepped portion 18b1 provided at the rotation center shaft 18 by the biasing force of the elastic member 34 which acts in the axis line direction of the rotation center shaft 18 to thereby push the detent device 30, according to an example shown in Fig. 3. This can reduce a rattling of the shift fork 11 in the axis line direction of the rotation center shaft 18.

The detent device 30 includes a longitudinal cylindrical member 31 which extends in the axis line of the rotation center shaft 18 and the elastic member 34 which pushes the detent ball 32 towards the shift fork 11 by the biasing force which acts in the axis line of the rotation center shaft 18 according to an example shown in Fig. 3. However, instead of this structure, the detent device 30 may be configured to include the longitudinal cylindrical member 31 extending in a vertical direction relative to the axis line of the rotation center shaft 18 and the elastic member 34 which pushes the detent ball 32 towards the shift fork 11 by the biasing force which acts in a vertical direction relative to the axis line of the rotation center shaft 18. In such structure, similar to the above structure, the shift fork 11 can be stably maintained at the neutral position, the first engaging position and the second engaging position.

It is noted that the detent device 30 is provided with the inclined surfaces 37 and 38 as the inclined surface, which are provided at both sides of the swinging directions of the shift fork 11 with respect to the recessed portion 36. However, it is apparent that when only one speed change gear which engages with the hub 14 is provided, only one inclined surface may suffice accordingly.

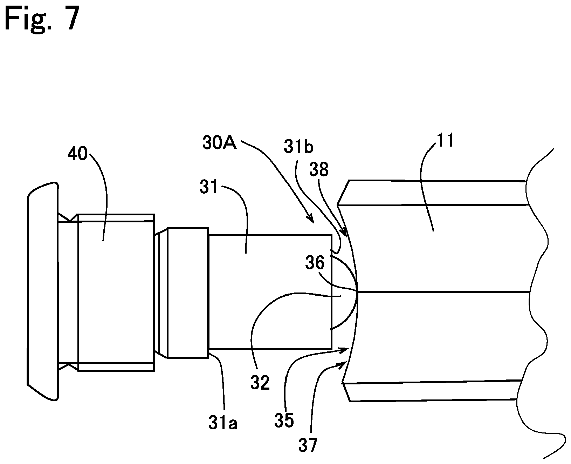

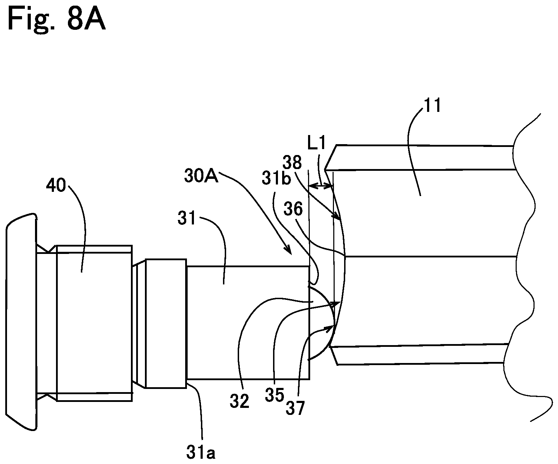

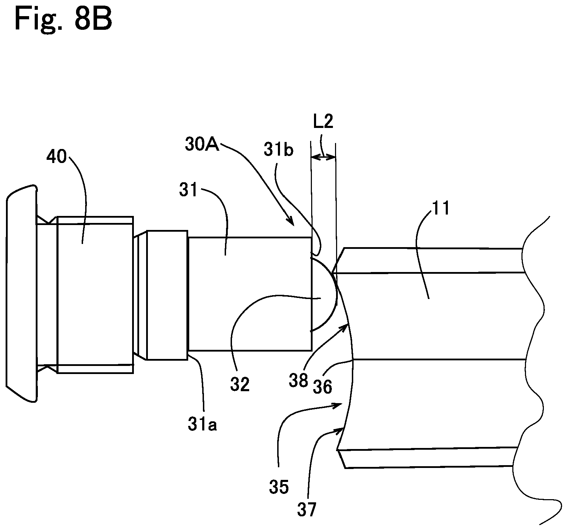

Next, other embodiments of the detent device associated with the invention will be explained with reference to Figs. 7, 8A and 8B. According to the detent device 30A of another embodiment includes, as shown in Figs. 7, 8A and 8B, the recessed portion 36 which forms the pressure receiving portion 35 and the first inclined surface 37 (including the first surface 37a and the second surface 37b) and the second inclined surface 38 (including the first surface 38a and the second surface 38b) which are shaped in a curvature forming a part of an arc, wherein the curvature radius of the recessed portion 36 and the first inclined surface 37 and the second inclined surface 38 is set to be larger than the curvature radius "y" of the detent ball 32, which is a different structure from that of the first embodiment, but similar function can be exerted.

Since the pressure receiving portion 35 of the detent device 30A is formed in a shape of curvature forming a part of an arc, compared to the pressure receiving portion 35 of the detent device 30 which includes the recessed portion 36, the first surface 37a which is a gradually sloped surface and the second surface 37b which is a steeply sloped surface of the first inclined surface 37 and the first surface 38a which is a gradually sloped surface and the second surface 38b which is a steeply sloped surface of the second inclined surface 38, the inflection point of the load can be eliminated to achieve a smooth operation.

Similar to the detent device 30, according to the detent device 30A, the shift fork 11 can be stably maintained at the neutral position at the deepest part of the curvature of the pressure receiving portion 35 forming a part of an arc, as shown in Fig. 7.

Similar to the detent device 30, according to the detent device 30A, the shift fork 11 can be stably maintained at the first engaging position at the pressure receiving portion 35 in the shape of curvature which is a part of an arc, as shown in Fig. 8A. When the shift fork 11 is positioned at the first engaging position and the detent ball 32 is pushed to the pressure receiving portion 35 in the shape of curvature which is a part of an arc, the facing distance L1 between the position where the detent ball 32 is pushed to the pressure receiving portion 35 and the tip end surface 31b of the cylindrical member 31 in a longitudinal direction of the cylindrical member 31 is set to be shorter than the diameter "2y" of the detent ball 32. Thus, similar to the detent device 30, the detent ball 32 is not separated from the cylindrical member 31.

Similar to the detent device 30, according to the detent device 30A, the shift fork 11 can be stably maintained at the second engaging position at the pressure receiving portion 35 in the shape of curvature which is a part of an arc, as shown in Fig. 8B. When the shift fork 11 is positioned at the second engaging position and the detent ball 32 is pushed to the pressure receiving portion 35 in the shape of curvature which is a part of an arc, the facing distance L2 between the position where the detent ball 32 is pushed to the pressure receiving portion 35 and the tip end surface 31b of the cylindrical member 31 in a longitudinal direction of the cylindrical member 31 is set to be shorter than the diameter "2y" of the detent ball 32. Thus, similar to the detent device 30, the detent ball 32 is not separated from the cylindrical member 31.

### (Advantageous Effect of Embodiments)

As explained above, the shift device 10 for a transmission according to the embodiment of the invention includes a power transmitting shaft 12, a housing 17 which accommodates a transmission including the power transmitting shaft 12, a shift shaft 13 displaceable in a longitudinal direction of the power transmitting shaft 12 in response to a shift operation and a hub 14 which rotates with the power transmitting shaft 12 as a unit and at the same time which is shifted in the longitudinal direction of the power transmitting shaft 12. The hub 14 is engageable in a rotational direction with a speed change gear 15, 16 provided on the power transmitting shaft 12. The shift device 10 further includes a rotation center shaft 18 provided at the housing 17 on an axis line which extends in a direction orthogonal to an axis line of the power transmitting shaft 12 and a shift fork 11 which includes a connecting portion 19 at a tip end portion, a recessed portion 36 and an inclined surface 37, 38 continuing to an opening portion of the recessed portion 36 and inclining relative to the rotation center shaft 18, the shift fork 11 being rotatably supported by the rotation center shaft 18 and at the same time engageable with the shift shaft 13 and swingable about the rotation center shaft 18 in response to a displacement of the shift shaft 13 to thereby shift the hub 14 in the longitudinal direction of the power transmitting shaft 12 via the connecting portion 19 and a detent device 30, 30A which includes an engaging member 32 provided between the housing 14 and the shift fork 11 to be engageable with the recessed portion 36 of the shift fork 11 and an elastic member 34 which pushes the engaging member 32 towards the recessed portion 36 of the shift fork 11. In a neutral position where the hub 14 and the speed change gear 15, 16 are in a disengaging state, the engaging member 32 is pushed towards the recessed portion 36 by a biasing force of the elastic member 34 thereby to maintain the neutral position of the shift fork 11 and in an engaging position where the hub 14 and the speed change gear 15, 16 are in an engaging state, the engaging member 32 is pushed to the inclined surface 37, 38 of the shift fork 11 by the biasing force of the elastic member 34 to bias the shift fork 11 to the engaging position. Thus, the neutral position and the engaging position of the shift fork 11 which swings about the rotation center shaft 18 are stably maintained by means of the detent device 30, 30A. Accordingly, the neutral position and the engaging position of the shift fork 11 cannot be separated due to a vibration which is generated while the vehicle is running.

As explained above, the shift device 10 for a transmission according to the embodiment of the invention further includes a longitudinal cylindrical member 31 installed in the housing 17, wherein the engaging member 32 includes the detent ball 32 which is transferrable within the inside of the cylindrical member 31 and the facing distance L1, L2 between the tip end surface 31b of the cylindrical member 31 and the inclined surface 37, 38 is defined such that the detent ball 32 is not separated from the cylindrical member 31 when the shift fork 11 is positioned at the engaging position and the detent ball 32 is pushed towards the inclined surface 37, 38. Thus, even the shift fork 11 is shifted to the engaging position, the detent ball 32 is prevented from dropping off from the cylindrical member 31.

As explained above, in the shift device 10 for a transmission according to the embodiment of the invention, the cylindrical member 31 includes a shoulder portion 31a provided at an outer periphery of the cylindrical member 31 wherein the housing 17 includes a detent portion 17a which is engageable with the shoulder portion 31a. Thus, the position of the shoulder portion 31a relative to the housing 17 can be determined. Accordingly, the facing distance L1, L2 between the position of the inclined surface 37, 38 of the shift fork 11 where the detent ball 32 is pushed and the tip end surface 31b of the cylindrical member 31 in a longitudinal direction of the cylindrical member 31, which is the distance necessary for preventing the detent ball 32 from dropping off from the cylindrical member 31, can be easily set.

As explained above, in the shift device 10 for a transmission according to the embodiment of the invention, the facing distance L1, L2 between the tip end surface 31 b of the cylindrical member 31 and the inclined surface 37, 38 is set to be shorter than the diameter 2y of the detent ball 32. Thus, by this relationship between the diameter 2y of the detent ball 32 and the set facing distance L1, L2, the detent ball 32 is prevented from dropping off from the cylindrical member 31 when the detent ball 32 pushes the first inclined surface 37 or the second inclined surface 38 at the first engaging position or the second engaging position of the shift fork 11.

As explained, in the shift device 10 according to the embodiment of the invention, the inclined surface 37, 38 is configured such that the closer the inclined surface 37, 38 approaches the opening portion of the recessed portion 36, the narrower the facing distance L1, L2 between the tip end surface 31b and the inclined surface 37, 38a becomes, wherein the inclined surface 37, 38 includes a first surface 37a, 38a which continues to the opening portion of the recessed portion 36 and the second surface 37b, 38b which continues to the first surface 37a, 38a and to which the detent ball 32 is pushed when the shift fork 11 is positioned at the engaging position and wherein the change ratio of the second surface 37b, 38b relative to the facing distance L1, L2 is set to be greater than that of the first surface 37a, 38a. Accordingly, the inclination of the second surface 37b, 38b of the detent ball 32 is steeper than the inclination of the first surface 37a, 38a to stably position the shift fork 11 at the engaging position. As explained, by providing a gradually sloped surface and a steeply sloped surface formed at the first surface 37a, 38a and the second surface 37b, 38b on the inclined surface 37, 38, a different tangent angle can be formed between the detent ball 32 and the inclined surface 37, 38 to easily set a desired pushing load to the detent ball 32 to the inclined surface 37, 38.

As explained, in the shift device 10 according to the embodiment of the invention, the recessed portion 36, the first inclined surface 37 and the second inclined surface 38 are shaped in a curvature forming a part of an arc, wherein the curvature radius of the recessed portion 36 and the first inclined surface 37 and the second inclined surface 38 is set to be larger than the curvature radius "y" of the detent ball 32. Thus, the inflection point of the load can be eliminated to achieve a smooth operation.

As explained, in the shift device 10 according to the embodiment of the invention, the inclined surface 37, 38 of the shift fork 11 is provided at both swinging directions of the shift fork 11 relative to the recessed portion 36. Thus, even when the engaging position of the shift fork 11 is provided at both sides of the neutral position of the shift fork 11, the neutral position and the engaging position of the swinging shift fork 11 can be stably maintained.

As explained, in the shift device 10 for a transmission according to the embodiment of the invention, the detent device 30 is arranged such that the biasing force of the elastic member 34 acts in the axis line direction of the rotation center shaft 18, to thereby reduce a rattling of the shift fork 11 in the axis line direction of the rotation center shaft 18.

It is noted here that if a plurality of embodiments exists, unless otherwise stated, any combination of such embodiments can be apparently possible.

### [Reference Numerals and Signs]

1: transmission, 10: shift device for the transmission, 11: shift fork, 12: power transmitting shaft, 13: shift shaft, 14: hub, 15: speed change gear, 16: speed change gear, 17: housing, 17a: detent portion, 18: rotation center shaft, 19: connecting portion, 30: detent device, 30A: detent device, 31: cylindrical member, 31a: shoulder portion, 31b: tip end surface, 32: detent ball (engaging member), 34: elastic member, 36: recessed portion, 37: first inclined surface (inclined surface), 38: second inclined surface (inclined surface).

## Claims

1. A shift device for a transmission comprising:
a power transmitting shaft;
a housing accommodating the transmission which includes the power transmitting shaft;
a shift shaft being displaceable along in a longitudinal direction of the power transmitting shaft in response to a shift operation;
a hub rotating with the power transmitting shaft as a unit and at the same time being shifted in a longitudinal direction of the power transmitting shaft to be engageable with a speed change gear provided on the power transmitting shaft in a rotational direction;
a rotation center shaft provided at the housing on an axis line which extends in a direction orthogonal to an axis line of the power transmitting shaft;
a shift fork including a connecting portion at a tip end portion, a recessed portion and an inclined surface continuing to an opening portion of the recessed portion and inclining relative to the rotation center shaft, wherein the shift fork is rotatably supported by the rotation center shaft and at the same time is engageable with the shift shaft and wherein the shift fork is swingable about the rotation center shaft in response to a displacement of the shift shaft to thereby shift the hub in the longitudinal direction of the power transmitting shaft via the connecting portion; and
a detent device including an engaging member provided between the housing and the shift fork for engaging with the recessed portion of the shift fork and an elastic member pushing the engaging member towards the recessed portion of the shift fork, wherein in a neutral position where the hub and the speed change gear are in a non-engaging state, the engaging member is pushed to the recessed portion by a biasing force of the elastic member to thereby maintain the neutral position of the shift fork and in an engaging position where the hub and the speed change gear are in an engaging state, the engaging member is pushed to the inclined surface of the shift fork by the biasing force of the elastic member thereby to bias the shift fork to the engaging position.

2. The shift device for a transmission according to claim 1, further comprising:
a longitudinal cylindrical member installed in the housing, wherein
the engaging member includes a detent ball which is transferrable within an inside of the cylindrical member and a facing distance between a tip end surface of the cylindrical member and the inclined surface is defined such that the detent ball is not separated from the cylindrical member when the shift fork is positioned at the engaging position and the detent ball is pushed to the inclined surface.

3. The shift device for the transmission according to claim 2, wherein
the cylindrical member includes a shoulder portion provided at an outer periphery thereof and wherein the housing includes a detent portion which is engageable with the shoulder portion.

4. The shift device for the transmission according to claim 2 or 3, wherein
the facing distance is set to be shorter than a diameter of the detent ball.

5. The shift device for the transmission according to any one of claims 2 through 4, wherein
the inclined surface is provided such that the closer the inclined surface approaches the opening portion of the recessed portion, the narrower the facing distance becomes;
the inclined surface includes a first surface which continues to the opening portion of the recessed portion and a second surface which continues to the first surface and to which the detent ball is pushed when the shift fork is positioned at the engaging position; and wherein
a change ratio of the facing distance of the second surface is set to be larger than the change ratio of the facing distance of the first surface.

6. The shift device for the transmission according to any one of claims 2 through 4, wherein
the recessed portion and the inclined surface are formed as a curvature shape forming a part of an arc and a curvature radius of the recessed portion and the inclined surface is set to be larger than a curvature radius of the detent ball.

7. The shift device for the transmission according to any one of claims 1 through 6, wherein
the inclined surface is provided at both swinging directions of the shift fork relative to the recessed portion of the shift fork.

8. The shift device for the transmission according to any one of claims 1 through 7, wherein
the detent device is arranged such that the biasing force of the elastic member acts in the axis line direction of the rotation center shaft.

## Amended claims

### Amended claims under Art. 19.1 PCT

1. (After amendment) A shift device for a transmission comprising:
a power transmitting shaft;
a housing accommodating the transmission which includes the power transmitting shaft;
a shift shaft being displaceable along in a longitudinal direction of the power transmitting shaft in response to a shift operation;
a hub rotating with the power transmitting shaft as a unit and at the same time being shifted in a longitudinal direction of the power transmitting shaft to be engageable with a speed change gear provided on the power transmitting shaft in a rotational direction;
a rotation center shaft provided at the housing on an axis line which extends in a direction orthogonal to an axis line of the power transmitting shaft;
a shift fork including a connecting portion at a tip end portion, a recessed portion and an inclined surface continuing to an opening portion of the recessed portion and inclining relative to the rotation center shaft, wherein the shift fork is rotatably supported by the rotation center shaft and at the same time is engageable with the shift shaft and wherein the shift fork is swingable about the rotation center shaft in response to a displacement of the shift shaft to thereby shift the hub in the longitudinal direction of the power transmitting shaft via the connecting portion;
a detent device including an engaging member provided between the housing and the shift fork for engaging with the recessed portion of the shift fork and an elastic member pushing the engaging member towards the recessed portion of the shift fork, wherein in a neutral position where the hub and the speed change gear are in a non-engaging state, the engaging member is pushed to the recessed portion by a biasing force of the elastic member to thereby maintain the neutral position of the shift fork and in an engaging position where the hub and the speed change gear are in an engaging state, the engaging member is pushed to the inclined surface of the shift fork by the biasing force of the elastic member thereby to bias the shift fork to the engaging position; and
a longitudinal cylindrical member installed in the housing, wherein
the engaging member includes a detent ball which is transferrable within an inside of the cylindrical member and a facing distance between a tip end surface of the cylindrical member and the inclined surface is defined such that the detent ball is not separated from the cylindrical member when the shift fork is positioned at the engaging position and the detent ball is pushed to the inclined surface; and wherein
the recessed portion and the inclined surface are formed as a curvature shape forming a part of an arc and a curvature radius of the recessed portion and the inclined surface is set to be larger than a curvature radius of the detent ball.

2. (Deleted)

3. (After Amended) The shift device for the transmission according to claim 1, wherein
the cylindrical member includes a shoulder portion provided at an outer periphery thereof and wherein the housing includes a detent portion which is engageable with the shoulder portion.

4. The shift device for the transmission according to claim 1 or 3, wherein
the facing distance is set to be shorter than a diameter of the detent ball.

5. (Deleted)

6. (Deleted)

7. (After Amended) The shift device for the transmission according to claim 1 and 3 through 4 , wherein
the inclined surface is provided at both swinging directions of the shift fork relative to the recessed portion of the shift fork.

8. (After Amended) The shift device for the transmission according to 1, 3 through 4 and 7, wherein
the detent device is arranged such that the biasing force of the elastic member acts in the axis line direction of the rotation center shaft.

Statement under Art. 19.1 PCT
The feature of claim 2 "the engaging member includes a detent ball which is transferrable within an inside of the cylindrical member and a facing distance between a tip end surface of the cylindrical member and the inclined surface is defined such that the detent ball is not separated from the cylindrical member when the shift fork is positioned at the engaging position and the detent ball is pushed to the inclined surface" and the feature of claim 6 "the recessed portion and the inclined surface are formed as a curvature shape forming a part of an arc and a curvature radius of the recessed portion and the inclined surface is set to be larger than a curvature radius of the detent ball" are added into claim 1 in order to clearly define the invention of claim 1.

Fig. 3 of the cited document 7 (JP63-13548 Y2) discloses a control shifter 43 which is fixed to the speed change operation shaft 42 to assure the returning thereof to a predetermined position by the cooperation of the ball 52 and the tapered portion 49 of the detent groove 48 and the spring 51. When the control shifter 43 is shifted from the position indicated in Fig. 3, the ball 52 overrides on the circumferential surface of the speed change operation shaft 42 from the tapered portion 49 of the detent groove 48. This operation generates a load inflection point. Next, when the speed change lever is slightly retuned in the reverse direction, the ball 52 moves to the tapered portion 49 of the detent groove 48 and thus the control shifter 43 is returned to its predetermined position.

On the other hand, the objective of the invention is to provide a shift device for a transmission which can stably maintaining the neutral position and the engaging position of the shift fork. By the structure of claim 1, the neutral position and the engaging position of the shift fork can be stably maintained by the detent device. Further, even the shift fork is shifted in the engaging position, detent ball is prevented from dropping off from the cylindrical member. Still further, by providing the curvature radius of the recessed portion and the inclined surface to be larger than the curvature radius of the detent ball, any load inflection point in the detent device can be eliminated to be able to achieve a smooth operation.
